# EUROPÄISCHE PATENTSCHRIFT

(11) **EP 1 511 607 B1**
(45) Veröffentlichungstag und Bekanntmachung des Hinweises auf die Patenterteilung: **19.03.2008**
(21) Anmeldenummer: 03702170.6
(22) Anmeldetag: 07.01.2003
(51) Int. Cl.: B29B 7/82, B29C 47/10, B29B 17/00, B29B 13/10, B29B 7/86

(54) **VORRICHTUNG ZUR AUFBEREITUNG VON THERMOPLASTISCHEM KUNSTSTOFFMATERIAL**
DEVICE FOR PROCESSING THERMOPLASTIC MATERIAL
DISPOSITIF POUR LA PREPARATION DE MATIERE THERMOPLASTIQUE

(30) Priorität: 05.06.2002 AT 8552002
(43) Veröffentlichungstag der Anmeldung: 09.03.2005
(73) Patentinhaber: EREMA Engineering Recycling Maschinen und Anlagen Gesellschaft m.b.H., 4052 Ansfelden (AT)
(72) Erfinder: Helmut Bacher, 4490 St. Florian (AT); Helmuth Schulz, 4020 Linz (AT); Georg Wendelin, 4033 Linz (AT)
(74) Vertreter: Wildhack, Helmut
(86) Internationale Anmeldenummer: PCT/AT2003/000002
(87) Internationale Veröffentlichungsnummer: WO 2003/103915

(56) Entgegenhaltungen:
- EP-A- 0 578 603
- EP-A- 0 899 071
- WO-A-00/64654
- WO-A-01/21372
- WO-A-89/07042
- WO-A-93/22119
- US-A- 3 685 748
- US-A- 5 536 154
- US-A- 6 149 012
- PATENT ABSTRACTS OF JAPAN vol. 2000, no. 16, 8. Mai 2001 (2001-05-08) & JP 2001 026019 A (SINTOKOGIO LTD;NISSAN MOTOR CO LTD; TAKASE GOSEI KAGAKU KK), 30. Januar 2001 (2001-01-30)

## Beschreibung

Die Erfindung bezieht sich auf eine Vorrichtung zur Aufbereitung von thermoplastischem, zu recycelndem Kunststoffmaterial, mit einem ersten und einem zweiten Aufnahmebehälter für das zu bearbeitende Material, in welchen Behältern jeweils um vertikale Achsen umlaufende Werkzeuge zur Mischung und Erwärmung des Materials vorgesehen sind, wobei jeweils zumindest zwei Werkzeuge in unterschiedlichen Ebenen übereinander umlaufen und das Material aus dem ersten Behälter durch einen Verbindungskanal in den an eine Evakuiereinrichtung angeschlossenen zweiten Behälter gelangt, und wobei der erste Behälter oben eine Einbringeöffnung für das zu bearbeitende Material hat, die höher liegt als die höchsten in diesem Behälter umlaufenden Werkzeuge und eine Austragsöffnung des zweiten Behälters zumindest annähernd auf der Höhe der untersten, in diesem Behälter umlaufenden Werkzeuge liegt, und wobei die Mündung des Verbindungskanals in den zweiten Behälter höher liegt als die in diesem Behälter umlaufenden Werkzeuge und das bearbeitete Material vom zweiten Behälter durch die Austragsöffnung mittels zumindest einer Schnecke abgeführt wird, wodurch dieser Behälter vakuumdicht abgeschlossen wird, und der erste Behälter ebenfalls an eine Evakuiereinrichtung angeschlossen ist.

Eine derartige Vorrichtung ist aus WO 01/21372 A1 bekannt.

Eine andere Vorrichtung, ebenfalls mit zwei, vom bearbeiteten Material in Serie durchlaufenen Behältern ist aus EP 632759 B1 bekannt.

Solche Vorrichtungen arbeiten in der Regel zufriedenstellend, wenn das zu verarbeitende Material nicht besondere Anforderungen stellt, insbesondere hinsichtlich Empfindlichkeit gegen Luftzutritt und/oder Überhitzung und/oder wenn eine Verkürzung der Molekülkettenlänge vermieden werden soll.

Die Erfindung setzt sich zur Aufgabe, eine Vorrichtung der eingangs geschilderten Art so zu verbessern, dass auch heikles Material, insbesondere PET (Polyethylen-Terephthalat) schonend und kontinuierlich verarbeitet werden kann, ohne dass die Gefahr besteht, dass dieses Material durch zu starke Wärmeeinwirkung geschädigt wird. Insbesondere ist bei PET angestrebt, eine Verringerung des IV-Wertes (Intrinsic Viscosity) zu vermeiden, nach Möglichkeit sogar diesen Wert zu erhöhen, was gleichbedeutend ist mit einer Erhöhung der Festigkeit aus dem recycelten Kunststoffmaterial hergestellter Produkte.

Die Erfindung löst diese Aufgabe dadurch, dass an die Einbringöffnung des ersten Behälters eine Schleuse angeschlossen ist und in beiden Behältern die Werkzeuge auf übereinander angeordneten scheibenförmigen Werkzeugträgern befestigt sind und in jedem der beiden Behälter für jede Ebene der umlaufenden Werkzeuge zumindest ein Temperaturfühler vorgesehen ist, der höher angeordnet ist als die ihm zugeordnete Ebene. Dadurch steht das der Vorrichtung zugeführte, zu recycelnde Kunststoffmaterial von der Einbringung in den ersten Behälter an bis zur Abfuhr durch die Schnecke aus dem zweiten Behälter ständig unter Vakuum, sodass schädigende atmosphärische Einflüsse vermieden sind und das Material gleichsam wie in einem Autoklaven bearbeitet wird. Durch die auf unterschiedlicher Höhe umlaufenden Werkzeuge in jedem Behälter ergibt sich für jeden Behälter eine genügende Verweilzeit des im betreffenden Behälter bearbeiteten Materiales, was wesentlich zur Erzeugung einer homogenen Verarbeitung des Materiales beiträgt. Im ersten Behälter gelangt das durch die Schleuse zugeführte Material von oben auf die' obersten umlaufenden Werkzeuge und wird von diesen zur Umlaufbewegung um die Behälterachse in Form einer Mischtrombe bewegt. Allmählich gelangt das von den im ersten Behälter oben angeordneten Werkzeugen bearbeitete Material in den Bereich unter diese Werkzeuge und wird vom darunter liegenden Werkzeug erfasst und von diesem ebenfalls in Form einer Mischtrombe umgewälzt. Dieser Vorgang wiederholt sich, je mehr Werkzeugebenen im betreffenden Behälter vorhanden sind. Da jeder dieser Ebenen ein Temperaturfühler zugeordnet ist, der höher als die betreffende Werkzeugebene liegt, kann durch entsprechende Überwachung der von den Temperaturfühlern angezeigten Werte eine Überhitzung des bearbeiteten Materiales und damit eine thermische Schädigung desselben überall vermieden werden.

Aus dem ersten Behälter gelangt das behandelte Material durch den Verbindungskanal in den zweiten Behälter und wird dort ebenfalls von oben auf die in diesem Behälter umlaufenden Werkzeuge aufgebracht. Die Bearbeitung durch diese Werkzeuge erfolgt im zweiten Behälter in analoger Weise wie im ersten Behälters, d.h., das Material wird zunächst durch die obersten Werkzeuge erfasst und gelangt allmählich in den Bereich der darunter liegenden Werkzeuge. Das so vollkommen homogenisierte Material wird schließlich von den untersten, im zweiten Behälter angeordneten Werkzeugen in die Austragsöffnung des zweiten Behälters eingedrückt und durch die an diese Öffnung angeschlossene Schnecke abgeführt. Diese Schnecke wirkt vakuumdicht, z.B. durch Komprimierung des ihr zugeführten Materiales, sodass das im zweiten Behälter erzeugte Vakuum bei der Abführung des bearbeiteten Materiales nicht verloren geht. Es ergibt sich am Einzug der Schnecke ein vollkommen homogenisiertes und im gewünschten Grad kristallisiertes Material, das jedoch in keiner Weise thermisch geschädigt ist. Überraschend hat sich herausgestellt, dass sogar eine Erhöhung des IV-Wertes erzielbar ist, sodass aus dem so erhaltenen recyceltem Material Produkte mit der gewünschten hohen Festigkeit erzeugbar sind.

Durch die scheibenförmigen Werkzeugträger wird gesichert, dass das bearbeitete Material nur durch den Ringspalt zwischen dem Rand dieses Werkzeugträgers und der Innenwand des betreffenden Behälters von oben nach unten absinken kann. Dies begünstigt die Aufrechterhaltung der angestrebten Verweilzeit für jedes einzelne Kunststoffteilchen im betreffenden Behälter.

Gemäß einer Weiterbildung der Erfindung ist die Evakuierungseinrichtung zur Erzeugung unterschiedlicher Vakuumbedingungen in den beiden Behältern eingerichtet und es ist im Verbindungskanal eine Übergabeschleuse angeordnet. Dadurch besteht die Möglichkeit, in den beiden Behältern mit-unterschiedlichen Vakua zu arbeiten, ohne dass der Druckunterschied durch die Überführung des bearbeiteten Materiales vom ersten Behälter in den zweiten Behälter gestört wird. Trotz dieser Vakuumschleuse ist eine kontinuierliche Arbeitsweise möglich, da die Schleuse so betrieben werden kann, dass eine kontinuierliche Abfuhr des bearbeiteten Materiales aus dem ersten Behälter aufrecht erhalten werden kann und ebenso eine ausreichend kontinuierliche Beschickung des zweiten Behälters.

Für die Aufrechterhaltung des Vakuums in den beiden Behältern kann eine einzige Vakuumpumpe genügen. Sind unterschiedliche Vakuumbedingungen in den beiden Behältern gewünscht, so ist es jedoch günstiger, wenn die Evakuierungseinrichtung für jeden Behälter zumindest eine Vakuumpumpe aufweist. Ferner ist zweckmäßig im Rahmen der Erfindung die Anordnung so getroffen, dass an jeden Behälter eine Überwachungseinrichtung für das im betreffenden Behälter herrschende Vakuum angeschlossen ist, die das Vakuum im betreffenden Behälter einstellbar steuert, sodass in jedem Behälter das jeweils gewünschte Vakuum erzielbar ist und aufrecht erhalten werden kann.

Gemäß einer bevorzugten Ausführungsform der Erfindung ist an zumindest einem der dieser Werkzeugträger der Scheibenrand tellerartig aufgebogen.

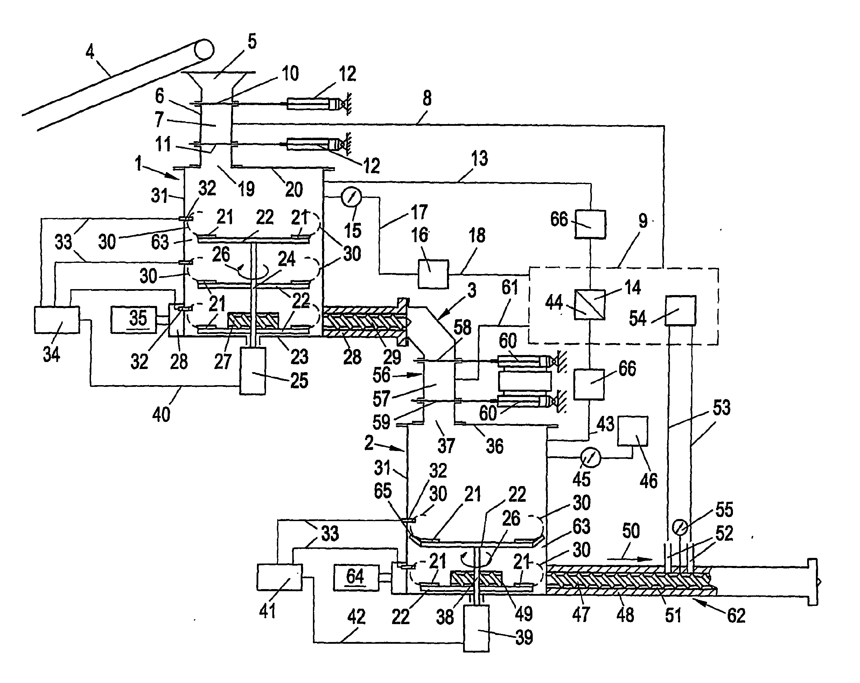

Weitere Kennzeichen und Vorteile der Erfindung ergeben sich aus der Beschreibung eines Ausführungsbeispieles, welches in der Zeichnung schematisch dargestellt ist.

Die in der Zeichnung dargestellte Vorrichtung hat zwei Behälter 1, 2, die miteinander durch einen Verbindungskanal 3 verbunden sind. Die Zufuhr des zu verarbeitenden thermoplastischen Kunststoffmateriales, welches häufig PET (Polyethylen-Terephthalat) ist, insbesondere in Form von Mahlgut aus Flaschen und Flaschenvorformlingen, Folien, Fasern usw., also zumeist in vorzerkleinerter Form, erfolgt über ein Förderband 4 in einen Trichter 5, an dessen Auslaufende eine Schleuse 6 angeschlossen ist, die als Vakuumschleuse ausgebildet sein kann, wofür ihr Innenraum 7 über eine Leitung 8 an eine Evakuiereinrichtung 9 angeschlossen sein kann. Die Schleuse 6 hat oben und unten zwei vakuumdicht abschließende Schieber 10, 11, die von doppeltwirkenden Zylindern 12 verschoben werden können, diese Zylinder 12 sind zweckmäßig hydraulisch oder pneumatisch angespeist. Durch diese Schleuse 6 kann auch bei laufender Einbringung des zu recycelnden Gutes in den Behälter 1 in diesem ein ausreichendes Vakuum aufrecht erhalten werden, wofür der Innenraum des Behälters 1 über eine Leitung 13 an eine Vakuumpumpe 14 der Evakuiereinrichtung 9 angeschlossen ist. Dieses Vakuum wird durch ein Vakuummessgerät 15 laufend gemessen und die Messwerte werden an eine Überwachungseinrichtung 16 über eine Leitung 17 gegeben, welche Überwachungseinrichtung 16 an die Evakuiereinrichtung 9 über eine Leitung 18 angeschlossen ist, sodass die Evakuiereinrichtung 9 laufend für das gewünschte Vakuum im Behälter 1 sorgt.

Das Auslaufende der Schleuse 6 ist an eine Einbringöffnung 19 im oberen Bereich oder im Deckel 20 des Behälters 1 angeschlossen, sodass das eingebrachte, zu recycelnde Kunststoffmaterial von oben auf Werkzeuge 21 fällt, die auf einem Werkzeugträger 22 montiert sind, der mittels einer vertikalen, den Behälterboden 23 vakuumdicht durchsetzenden Welle 24 von einem Motor 25 zum Umlauf um die Achse der Welle 24 in Richtung des Pfeiles 26 angetrieben ist. Ähnliche Werkzeuge 21 sitzen auf weiteren Werkzeugträgern 22, die in Abständen unterhalb des obersten Werkzeugträgers 22 an der Welle 24 befestigt sind. Der unterste dieser Werkzeugträger 22 liegt knapp über dem Boden 23 des Behälters 1 derart, dass die von ihm getragenen Werkzeuge 21 auf der Höhe einer Austragsöffnung 27 liegen, über welche das Gehäuse 28 einer Schnecke 29 tangential an den Behälter 1 angeschlossen ist. Diese Austragsöffnung 27 bildet zugleich die Einzugsöffnung des Schneckengehäuses 28. Auf diese Weise drücken die umlaufenden Werkzeuge 21 des untersten Werkzeugträgers 22 das bearbeitete Material in die Gänge der Schnecke 29 ein, einerseits durch Zentrifugalwirkung und anderseits nach Art einer Spachtel, wenn die Werkzeuge 21 am Werkzeugträger 22 entsprechend angeordnet sind.

Die Werkzeuge 21 jedes Werkzeugträgers 22 veranlassen das von ihnen erfasste Kunststoffgut zum Umlauf um die Achse des Behälters 1, wobei das Gut in Form einer Mischtrombe 30 hochsteigt. Im Abstand oberhalb, des Werkzeugträgers 22 ist im Bereich der Mischtrombe an der Seitenwand 31. des Behälters 1 ein Temperaturfühler 32 angeordnet. Jeder Temperaturfühler 32 ist über eine Leitung 33 an eine Regeleinrichtung 34 angeschlossen. Diese Regeleinrichtung 34 steuert über eine Leitung 40 die Drehzahl des die Werkzeuge 21 zur Umlaufbewegung antreibenden Motors 25 so, dass Überhitzungen des im Behälter 1 bearbeiteten Gutes vermieden werden.

Die durch einen Motor 35 angetriebene Schnecke 29 fördert das im Behälter 1 bearbeitete Material in den Verbindungskanal 3, welcher über eine im Deckel 36 oder im oberen Bereich des zweiten Behälters 2 angeordnete Einbringöffnung 37 in diesen Behälter 2 mündet. In diesem Behälter 2 sind in ähnlicher Weise, wie dies für den Behälter 1 beschrieben wurde, umlaufende Werkzeuge 21 auf Werkzeugträgern 22 befestigt, die unter der Einbringöffnung 37 angeordnet sind und über eine Welle 38 von einem Motor 39 zur Drehung angetrieben werden. Die Drehzahl dieses Motors 39 wird ebenfalls von einer Regeleinrichtung 41 über eine Leitung 42 so gesteuert, dass die mittels Temperaturfühlern 32 abgefühlte Temperatur des im Behälter 2 bearbeiteten Kunststoffmateriales vorbestimmte eingestellte Temperaturwerte nicht übersteigt.

Die Werkzeuge 21 können auch von oben her angetrieben sein. In diesem Fall befindet sich der Motor 25 bzw. 39 oberhalb des Behälters 1 bzw. 2 und die Welle 24 bzw. 38 durchsetzt den Deckel 20 bzw. 36 vakuumdicht.

Der Behälter 2 ist ebenfalls evakuierbar und hiefür über eine Leitung 43 an eine Vakuumpumpe 44 der Evakuiereinrichtung 9 angeschlossen. Es können beide Behälter 1, 2 mittels derselben Vakuumpumpe evakuiert werden. Um die Anlage vielseitiger zu machen, ist jedoch die Verwendung gesonderter Vakuumpumpen 14, 44 für die beiden Behälter 1, 2 vorzuziehen, da auf diese Weise unterschiedliche Unterdruckbedingungen in den beiden Behältern 1, 2 auf einfache Weise erzielbar sind, und aufrecht erhalten werden können. Der Druck im Behälter 2 wird mittels eines Vakuummessgerätes 45 gemessen und über eine Überwachungseinrichtung 46 an die Evakuiereinrichtung 9 gemeldet, sodass stets die gewünschten Vakuumbedingungen im Behälter 2 herrschen, in analoger Weise wie in Behälter 1.

Aus dem Behälter 2 wird das aufbereitete Kunststoffmaterial mittels einer Schnecke 47 ausgebracht, deren Gehäuse 48 in ähnlicher Weise wie dies für den Behälter 1 beschrieben wurde, über eine Austragsöffnung 49 an den Behälter 2 angeschlossen ist. Diese Austragsöffnung 49 liegt auf der Höhe der vom untersten Werkzeugträger 22 getragenen Werkzeuge 21 des Behälters 2, sodass die Befüllung der Schnecke 47 in ähnlicher Weise erfolgt wie die Befüllung der Schnecke 29. Der Kerndurchmesser der Schnecke 47 vergrößert sich in Förderrichtung (Pfeil 50), sodass das durch die Austragsöffnung 49 der Schnecke zugeführte Material zunächst komprimiert wird. Dadurch wirkt die Schnecke 47 zusammen mit ihrem Gehäuse 48 als vakuumdichter Abschluss des Behälters 2. Im Anschluss an diese Kompressionszone verringert sich der Kerndurchmesser der Schnecke 47 wieder, sodass eine Entspannungszone 51 für das von der Schnecke 47 geförderte Material entsteht. In dieser Entspannungszone 51 kann zumindest eine Entgasungsöffnung 52 das Schneckengehäuse 48 durchsetzen. An die Öffnungen 52 sind Leitungen 53 für die Abfuhr der Gase angeschlossen. Die Gasabfuhr kann durch eine Vakuumpumpe 54 der Evakuierungseinrichtung 9 unterstützt werden. Das mittels der Pumpe 54 erzeugte Vakuum kann mittels eines Vakuummessgerätes 55 überwacht werden.

Gegebenenfalls können die Vakuumpumpen 14, 44, 54 auf unterschiedliche Evakuiereinrichtungen 9 aufgeteilt sein, in der Regel wird man jedoch die vakuumerzeugenden Bauteile zu einer einzigen Evakuiereinrichtung 9 zusammenfassen.

Wenn in den beiden Behältern 1 und 2 unterschiedliche Vakuumbedingungen aufrecht erhalten werden sollen und die Schnecke 29 und ihr Gehäuse 28 keinen vakuumdichten Abschluss zwischen den beiden Behältern 1, 2 bilden, dann ist es zweckmäßig, im Verbindungskanal 3 eine Übergabeschleuse 56 anzuordnen, deren Schleusenkammer 57 von zwei Schiebern 58, 59 begrenzt ist, welche von Zylindern 60 bewegt werden, in analoger Weise, wie dies für die Schleuse 6 der Fall ist. Ebenso ist auch die Schleusenkammer 57 der Übergabeschleuse 56 mittels einer Leitung 61 an die Evakuiereinrichtung 9 angeschlossen.

Die Schnecke 47 wird durch einen Motor 64 angetrieben und bildet zweckmäßig den Bestandteil eines Extruders 62, der das von der Schnecke 47 angelieferte Material in Strangform einer Granuliervorrichtung zuführt. Dieser Extruder 62 kann ein Doppelschneckenextruder sein. Ebenso ist es aber möglich, dass die Schnecke 47 nur als reine Transportschnecke wirkt und das von ihr geförderte Material einer weiteren Verarbeitung zuführt, z.B. (nach Plastifizierung) einer Formanlage.

Es ist zweckmäßig, in die Leitungen 17, 43, über welche die Evakuierung der Behälter 1, 2, erfolgt, Staubabscheider 66 einzuschalten, welche jenen Staub aus der abgesaugten Luft entfernen, der durch Abrieb bei der Bearbeitung der Kunststoffmasse im Behälter 1 bzw. 2 entsteht.

Durch die als Scheiben mit Kreisquerschnitt ausgebildeten Werkzeugträger 22 entsteht zwischen dem Rand jeder Scheibe und der Seitenwand 31 des betreffenden Behälters 1 bzw. 2 ein Ringspalt 63. Nur durch diesen Ringspalt 63 kann das Material von oben nach unten den betreffenden scheibenförmigen Werkzeugträger 22 passieren, was wesentlich dazu beiträgt, dass im jeweiligen Behälter 1 bzw. 2 eine ausreichende Verweilzeit für jedes Kunststoffteilchen sichergestellt wird. Hiezu trägt auch die Mehrfachanordnung der Werkzeugträger 22 bei, da jeder Werkzeugträger mit seinen Werkzeugen 21 wieder eine Aufwirbelung des ihm von oben zugeführten Kunststoffmateriales in Form der Mischtrombe 30 bewirkt. Die Anzahl der im jeweiligen Behälter 1 bzw. 2 übereinander angeordneten Werkzeugträger 22 richtet sich nach dem jeweils ins Auge gefassten Anwendungsgebiet, jedoch sollten in jedem Behälter 1, 2 zumindest zwei Werkzeugträger 22 übereinander angeordnet sein.

Es ist zweckmäßig, den Scheibenrand 65 tellerartig nach oben aufzubiegen bzw. abzuwinkeln, da dies die Ausbildung der Mischtrombe nach oben begünstigt und einem frühzeitigen Absinken der Kunststoffteilchen durch den zwischen Scheibenrand und Behälterwand bestehenden Spalt nach unten entgegenwirkt.

Wenn die Anlage für die Verarbeitung bereits vorzerkleinerten Kunststoffmateriales, z.B. PET-Flaschenmahlgut, ausgelegt ist, dann brauchen die Werkzeuge 21 nicht zerkleinernd zu wirken, sie können dann reine Mischwerkzeuge sein, die erwärmend auf das bearbeitete Material wirken, wobei die den Werkzeugen zugeführte Bewegungsenergie zum Großteil in auf das bearbeitete Material übertragene Wärmeenergie übergeht. Falls jedoch eine Zerkleinerung des zu verarbeitenden Kunststoffmateriales erforderlich ist, dann ist es zweckmäßig, die Werkzeuge 21 mit Schneidkanten, also messerartig, auszubilden, wobei diese Schneidkanten so angeordnet sind, dass sich beim Umlauf der Werkzeuge (Pfeile 26) ein ziehender Schnitt ergibt.

Die Temperaturfühler 32 in den beiden Behältern 1, 2 liegen, wie bereits erwähnt wurde, jeweils höher als der Werkzeugträger bzw die Werkzeugen 21, in deren Trombenbereich der betreffende Fühler 32 angeordnet ist. In vielen Fällen liegt eine günstige Höhe für die Anordnung der Fühler im Bereich, in welchem die betreffende Mischtrombe 30 die Wand 31 des Behälters 1 bzw. 2 verlässt.

Die Schneckengehäuse 28 bzw. 48 müssen nicht tangential an den jeweiligen Behälter 1 bzw. 2 angeschlossen sein, es ist auch eine radiale Anordnung oder eine Anordnung nach Art einer Sekante in Bezug auf den Behälter möglich. Die tangentiale Anordnung hat aber den Vorteil, dass der die Schnecke 29 bzw. 47 antreibende Motor 35 bzw. 64 am einen Stirnende der jeweiligen Schnecke angeordnet werden kann, und das Austragsende der Schnecke am anderen Stirnende des betreffenden Schneckengehäuses. Dies erspart eine seitliche Umlenkung des von der Schnecke geförderten Materiales.

## Patentansprüche

1. Vorrichtung zur Aufbereitung von thermoplastischem, zu recycelndem Kunststoffmaterial, mit einem ersten und einem zweiten Aufnahmebehälter (1, 2) für das zu bearbeitende Material, in welchen Behältern (1, 2) jeweils um vertikale Achsen umlaufende Werkzeuge (21) zur Mischung und Erwärmung des Materiales vorgesehen sind, wobei jeweils zumindest zwei Werkzeuge (21) in unterschiedlichen Ebenen übereinander umlaufen und das Material aus dem ersten Behälter (1) durch einen Verbindungskanal (3) in den an eine Evakuiereinrichtung (9) angeschlossenen zweiten Behälter (2) gelangt, und wobei der erste Behälter (1) oben eine Einbringeöffnung (19) für das zu bearbeitende Material hat, die höher liegt als die höchsten in diesem Behälter (1) umlaufenden Werkzeuge (21) und eine Austragsöffnung (49) des zweiten Behälters (2) zumindest annähernd auf der Höhe der untersten, in diesem Behälter (2) umlaufenden Werkzeuge (21) liegt, und wobei die Mündung des Verbindungskanals (3) in den zweiten Behälter (2) höher liegt als die in diesem Behälter (2) umlaufenden Werkzeuge (21) und das bearbeitete Material vom zweiten Behälter (2) durch die Austragsöffnung (49) mittels zumindest einer Schnecke (47) abgeführt wird, wodurch dieser Behälter (2) vakuumdicht abgeschlossen wird, und der erste Behälter (1) ebenfalls an eine Evakuiereinrichtung (9) angeschlossen ist, **dadurch gekennzeichnet, dass** an die Einbringeöffnung (19) des ersten Behälters (1) eine Schleuse (6) angeschlossen ist und in beiden Behältern (1, 2) die Werkzeuge (21) auf übereinander angeordneten scheibenförmigen Werkzeugträgern (22) befestigt sind und in jedem der beiden Behälter (1, 2) für jede Ebene der umlaufenden Werkzeuge (21) zumindest ein Temperaturfühler (32) vorgesehen ist, der höher angeordnet ist als die ihm zugeordnete Ebene.

2. Vorrichtung nach Anspruch 1, **dadurch gekennzeichnet, dass** die Evakuiereinrichtung (9) zur Erzeugung unterschiedlicher Vakuumbedingungen in den beiden Behältern (1, 2) eingerichtet ist und im Verbindungskanal (3) eine Übergabeschleuse (56) angeordnet ist.

3. Vorrichtung nach Anspruch 2, **dadurch gekennzeichnet, dass** die Evakuiereinrichtung (9) für jeden Behälter (1, 2) zumindest eine Vakuumpumpe (14, 44) aufweist.

4. Vorrichtung nach einem der Ansprüche 1 bis 3, **dadurch gekennzeichnet, dass** an jeden Behälter (1, 2) eine Überwachungseinrichtung (16, 46) für das im betreffenden Behälter (1, 2) herrschende Vakuum angeschlossen ist, die das Vakuum im betreffenden Behälter (1, 2) einstellbar steuert.

5. Vorrichtung nach einem der Ansprüche 1 bis 4, **dadurch gekennzeichnet, dass** an zumindest einem der Werkzeugträger (22) der Scheibenrand (65) tellerartig aufgebogen ist.

6. Vorrichtung nach einem der Ansprüche 1 bis 5, **dadurch gekennzeichnet, dass** die Temperaturfühler (32) an Einrichtungen (34, 41) für die Regelung der Umlaufgeschwindigkeit der Werkzeuge (21) angeschlossen sind.

7. Vorrichtung nach einem der Ansprüche 1 bis 6, **dadurch gekennzeichnet, dass** jede Evakuiereinrichtung (9) mit einem Staubabscheider (66) versehen ist.

8. Vorrichtung nach einem der Ansprüche 1 bis 7, **dadurch gekennzeichnet, dass** die Schnecke (47) ein Bestandteil eines Extruders (62) ist.

9. Vorrichtung nach Anspruch 8, **dadurch gekennzeichnet, dass** an die Austragsöffnung (49) ein Doppelschneckenextruder angeschlossen ist.

10. Vorrichtung nach einem der Ansprüche 1 bis 9, **dadurch gekennzeichnet, dass** das an die Austragsöffnung (49) angeschlossene Gehäuse (48) der Schnecke (47) zumindest eine Entgasungsöffnung (52) hat, an welche vorzugsweise eine Vakuumpumpe (54) angeschlossen ist.

11. Vorrichtung nach einem der Ansprüche 1 bis 10, **dadurch gekennzeichnet, dass** jeder Temperaturfühler (32) zumindest annähernd auf einer Höhe im Behälter (1, 2) angeordnet ist, die im Bereich liegt, in welchem die Mischtrombe (30), die Seitenwand (31) des Behälters (1, 2) verlässt.

12. Vorrichtung nach einem der Ansprüche 1 bis 11, **dadurch gekennzeichnet, dass** die Schleuse (6) bzw. (56) eine Vakuumschleuse ist.

## Claims

1. Apparatus for processing thermoplastic synthetic material that has to be recycled, comprising a first and a second receptacle (1, 2) for the material to be processed, in which receptacles (1, 2) tools (21) circulating around vertical axes are provided for mixing and heating the material, wherein at least two tools (21) each circulate in different levels one above the other, and the material reaches the second receptacle (2) that is connected to an evacuating means (9) from the first receptacle (1) through a connecting conduit (3), and wherein the first receptacle (1) has above an intake opening (19) for the material to be processed, which opening is disposed at a higher level then the highermost tools (21) circulating within this receptacle (1), and a discharge opening (49) of the second receptacle (2) is disposed at least substantially at the level of the lowermost tools (21) circulating in this receptacle (2), and the mouth of the connecting conduit (3) in the second receptacle (2) is disposed at a higher level than the tools (21) circulating in this receptacle (2), and wherein the processed material is carried off the second receptacle (2) through the discharge opening (49) by means of at least one screw (47), whereby this receptacle (2) is vacuum-tightly closed, and the first receptacle (1) is also connected to an evacuating means (9), **characterised in that** to the intake opening (19) of the first receptacle (1) a sluice (6) is connected and that in both receptacles (1, 2) the tools (21) are mounted on disc-shaped tool carriers (22) disposed one above the other, and that in each one of the two receptacles (1, 2) at least one temperature sensor (32) is provided for each level of the circulating tools (21), which sensor is disposed higher than the level associated to it.

2. Apparatus according to claim 1, **characterised in that** the evacuating means (9) is equipped for creating different vacuum conditions in the two receptacles (1, 2) and a transfer sluice (56) is disposed in the connecting conduit (3).

3. Apparatus according to claim 2, **characterised in that** the evacuating means (9) comprises at least one vacuum pump (14, 44) for each one of the receptacles (1, 2).

4. Apparatus according to any of claims 1 to 3, **characterised in that** a control means (16, 46) for the vacuum within the respective receptacle (1, 2) is connected to each one of the receptacles (1, 2), which control means adjustably controls the vacuum in the respective receptacle (1, 2).

5. Apparatus according to any of claims 1 to 4, **characterised in that** on at least one of the tool carriers (22) the disc edge (65) is upwardly bent like a plate.

6. Apparatus according to any of claims 1 to 5, **characterised in that** the temperature sensors (32) are connected to means (34, 41) for controlling the circulation of the tools (21).

7. Apparatus according to any of claims 1 to 6, **characterised in that** each one of the evacuating means (9) comprises a dust separator (66).

8. Apparatus according to any of claims 1 to 7, **characterised in that** the screw (47) constitutes a member of an extruder (62).

9. Apparatus according to claim 8, **characterised in that** a double screw extruder is connected to the discharge opening (49).

10. Apparatus according to any of claims 1 to 9, **characterised in that** to the discharge opening (49) a housing (48) of the screw (47) is connected, which housing comprises at least one de-gassing opening (52) to which preferably a vacuum pump (54) is connected.

11. Apparatus according to any of claims 1 to 10, **characterised in that** each temperature sensor (32) is disposed within the receptacle (1, 2) at least substantially at a level that is in the region in which the mixing cone (30) leaves the sidewall (31) of the receptacle (1, 2).

12. Apparatus according to any of claims 1 to 11, **characterised in that** the sluice (6 or 56) is a vacuum sluice.

## Revendications

1. Dispositif pour la préparation de matière thermoplastique à recycler, avec un premier et un second conteneurs (1, 2) destinés à recevoir le matériau à traiter et dans lesquels des outils rotatifs (21) autour d'axes verticaux sont prévus pour mélanger et échauffer le matériau, au moins deux outils (21) tournant dans différents plans superposés à l'intérieur de chaque conteneur et le matériau sortant du premier conteneur (1) via un canal de liaison (3) en direction du second conteneur (2) qui est raccordé à un dispositif de production de vide (9), le premier conteneur (1) présentant en partie haute une ouverture d'admission (19) du matériau à traiter qui est située plus haut que les plus hauts outils rotatifs (21) contenus dans ledit conteneur (1), et une ouverture de sortie (49) du second conteneur (2) étant située au moins sensiblement à la hauteur des plus bas outils rotatifs (21) contenus dans ledit conteneur (2), l'embouchure du canal de liaison (3) dans le second conteneur (2) étant située plus haut que les outils rotatifs (21) contenus dans ledit conteneur (2) et le matériau traité étant évacué du second conteneur (2) via l'ouverture de sortie (49) au moyen d'au moins une vis sans fin (47), ledit conteneur (2) étant de ce fait fermé de manière étanche au vide, et le premier conteneur (1) étant également raccordé à un dispositif de production de vide (9), **caractérisé en ce qu'**un sas (6) est raccordé à l'ouverture d'admission (19) du premier conteneur (1) et **en ce que**, dans les deux conteneurs (1, 2), les outils (21) sont fixés sur des porte-outils (22) en forme de disques agencés les uns au-dessus des autres, et **en ce qu'**il est prévu, pour chaque plan d'outil rotatif (21) dans chacun des deux conteneurs (1, 2), au moins une sonde thermique (32) agencée plus haut que le plan qui lui est associé.

2. Dispositif selon la revendication 1, **caractérisé en ce que** le dispositif de production de vide (9) est réglé pour établir des conditions de dépression différentes dans les deux conteneurs (1, 2) et **en ce qu'**un sas de transfert (56) est agencé dans le canal de liaison (3).

3. Dispositif selon la revendication 2, **caractérisé en ce que** le dispositif de production de vide (9) présente au moins une pompe à vide (14, 44) pour chaque conteneur (1, 2).

4. Dispositif selon l'une quelconque des revendications 1 à 3, **caractérisé en ce qu'**à chaque conteneur (1, 2) est raccordé un dispositif de surveillance (16, 46) du vide régnant dans le conteneur concerné (1, 2), lequel dispositif de surveillance contrôlant de manière réglable le vide dans le conteneur concerné (1, 2).

5. Dispositif selon l'une quelconque des revendications 1 à 4, **caractérisé en ce que**, sur au moins un des porte-outils (22), le bord de disque (65) est relevé à la manière d'une assiette.

6. Dispositif selon l'une quelconque des revendications 1 à 5, **caractérisé en ce que** les sondes thermiques (32) sont raccordées à des dispositifs (34, 41) de réglage de la vitesse de rotation des outils (21).

7. Dispositif selon l'une quelconque des revendications 1 à 6, **caractérisé en ce que** chaque dispositif de production de vide (9) est équipé d'un dépoussiéreur (66).

8. Dispositif selon l'une quelconque des revendications 1 à 7, **caractérisé en ce que** la vis sans fin (47) est un composant d'une extrudeuse (62).

9. Dispositif selon la revendication 8, **caractérisé en ce qu'**une extrudeuse à double vis est raccordée à l'ouverture de sortie (49).

10. Dispositif selon l'une quelconque des revendications 1 à 9, **caractérisé en ce que** le carter (48) de la vis sans fin (47), qui est raccordé à l'ouverture de sortie (49), présente au moins une ouverture de dégazage (52), à laquelle est de préférence raccordée une pompe à vide (54).

11. Dispositif selon l'une quelconque des revendications 1 à 10, **caractérisé en ce que** chaque sonde thermique (32) est agencée dans le conteneur (1, 2) au moins sensiblement à hauteur de l'endroit où le mélange tourbillonnant (30) quitte la paroi latérale (31) du conteneur (1, 2).

12. Dispositif selon l'une quelconque des revendications 1 à 11, **caractérisé en ce que** le sas (6) ou (56) est un sas à vide.
